# EUROPÄISCHE PATENTSCHRIFT

(11) **EP 4 132 822 B1**
(45) Veröffentlichungstag und Bekanntmachung des Hinweises auf die Patenterteilung: **05.03.2025**
(21) Anmeldenummer: 21725704.7
(22) Anmeldetag: 07.04.2021
(51) Int. Cl.: B60T 8/36

(54) **VERFAHREN UND VORRICHTUNG ZUM ANSTEUERN EINES FLUID-MAGNETVENTILS**
METHOD AND SYSTEM FOR CONTROLLING A MAGNETIC FLUID VALVE
MÉTHODE ET SYSTÈME DE COMMANDE D'UNE VANNE ELECTROMAGNÉTIQUE POUR FLUIDE

(30) Priorität: 08.04.2020 DE 102020109880
(43) Veröffentlichungstag der Anmeldung: 15.02.2023
(73) Patentinhaber: ZF CV Systems Europe BV, 1170 Brüssel (BE)
(72) Erfinder: TEICHMANN, Andreas, 30916 Isernhagen (DE); SCHRADER, Christian, 31228 Peine (DE); BRUNS, Peter, 30163 Hannover (DE); MEIER, Lars, 30890 Barsinghausen (DE)
(74) Vertreter: Copi, Joachim
(86) Internationale Anmeldenummer: PCT/EP2021/058999
(87) Internationale Veröffentlichungsnummer: WO 2021/204839

(56) Entgegenhaltungen:
- EP-A2- 1 291 256
- DE-A1- 19 848 960

## Beschreibung

Die Erfindung betrifft ein Verfahren und eine Vorrichtung zum Ansteuern oder Betätigen eines Fluid-Magnetventils in einem Fluidsystem eines Fahrzeugs.

In Fahrzeugen sind als Fluidsysteme insbesondere Pneumatiksysteme und Hydrauliksysteme vorgesehen, bei denen das jeweilige Fluid über Fluidventile gesteuert und geschaltet wird. Somit können verschiedene Einstellungen mittels elektrischer Steuersignale durch Fluid-Magnetventile eingestellt werden.

In den Fluid-Magnetventilen wird jeweils ein Anker, der verschiedene Fluid-Ausgänge verschließt oder öffnet, durch Bestromen einer Spulenanordnung verstellt. Der Anker wird hierbei insbesondere durch eine Federwirkung in einer ersten Schaltstellung (Grundstellung) gehalten und bei Bestromen der Spulenanordnung mittels eines Schaltstroms (Anzugstroms) in die zweite Schaltstellung (betätigte Stellung) verstellt. In der zweiten Schaltstellung wird der Anker im Allgemeinen mittels eines Haltestroms gegen die Federwirkung gehalten, wobei der Haltestrom im Allgemeinen geringer als der Schaltstrom (Anzugstrom) ist.

Die Ansteuerung der Spulenanordnung erfolgt im Allgemeinen über eine Treiberschaltung, insbesondere mit beidseitiger Treiber-Ansteuerung, d. h. über eine untere Treiberschaltung (low side switch) und obere Treiberschaltung (high side switch), zwischen denen die Spulenanordnung geschaltet ist, wobei diese Reihenschaltung aus den Treiberschaltungen und der Spulenanordnung zwischen eine Systemspannung (Versorgungsspannung) und Masse geschaltet ist. Hierbei kann z. B. eine Pulsbreitenmodulation erfolgen, bei der einer der Treiberschaltungen ein Steuersignal mit der Pulsbreitenmodulation zugeführt wird und diese entsprechend der Pulsbreiteninformation den Spulenstrom ein- und ausschaltet, d. h. einen internen Schalter (z. B. FET) schließt und öffnet. Aus der angelegten Systemspannung und dem eingestellten Pulsbreiten-Verhältnis zwischen 0 % und 100 % kann somit die effektiv angelegte Ansteuerspannung als Produkt der Systemspannung und der relativen Pulsbreite eingestellt werden. Der durch Anlegen der Ansteuerspannung erzeugte Spulenstrom kann hierbei gemessen werden, so dass somit die Informationen der Ansteuerspannung und des Spulenstroms vorliegen.

Für den Betrieb der Spulenanordnung bzw. des Solenoids sind grundsätzlich unterschiedliche Betriebsmodi möglich: So kann zum einen in einer einfachen Schaltung eine feste Ansteuerspannung angelegt werden, indem die Pulsweite abhängig von der Systemspannung eingestellt wird. Durch eine derartige Spannungssteuerung kann insbesondere sichergestellt werden, dass ein hinreichender Spulenstrom ausgebildet wird. Da der Ohmsche Widerstand der Spulenanordnung jedoch temperaturabhängig ist, stellt sich somit in Abhängigkeit der Spulentemperatur ein unterschiedlicher Spulenstrom ein.

Weiterhin sind Stromregelungen des Spulenstroms bekannt, die in beiden Schaltmodi, d. h. dem Schaltvorgang zum Verstellen des Ankers und auch dem Haltemodus zum Halten des verstellten Ankers eingesetzt werden können. Hierbei wird der Spulenstrom gemessen und durch Anpassung der Ansteuerspannung, d. h. insbesondere Einstellung einer relativen Pulsbreite bzw. des PWM-Verhältnisses geregelt. Somit ist eine präzisere Einstellung des Spulstroms möglich.

Die EP 1 291 256 A2 offenbart ein Verfahren, bei dem es das Ziel ist, die Ausfallsicherheit zu verbessern. Dieses Ziel wird dadurch erreicht, dass beim Einschalten des Magnetventils für eine Zeitdauer ti ein Anzugstrom la durch die Spule fließt, beim Umschalten von Anzugstrom auf Haltestrom Ih für die Zeit t2 bis ts das Ventil mit einem getakteten Dauerstromsignal betrieben wird, wobei das getaktete Dauerstromsignal mittels einerzweiten schaltbaren Diode langsam gelöscht wird und der Strom am Magnetventil über eine Rückmeldeeinrichtung überwacht wird.

Es zeigt sich jedoch, dass der Betrieb eines Fluid-Magnetventils bei niedrigeren Temperaturen, insbesondere bei Frost, nachteilhaft beeinträchtigt wird und eventuell der Schaltvorgang erschwert wird, z. B. durch schlechtere Gleitfähigkeit oder Schmierung, und weiterhin auch die zu verstellenden Bauteile an z. B. Gummidichtungen kleben können.

Der Erfindung liegt daher die Aufgabe zugrunde, ein Verfahren nach Anspruch 1 und eine Vorrichtung nach Anspruch 10 zum Ansteuern eines Fluid-Magnetventils zu schaffen, die einen sicheren Betrieb bei unterschiedlichen Bedingungen ermöglichen.

Diese Aufgabe wird durch ein Verfahren und eine Vorrichtung nach den unabhängigen Ansprüchen gelöst. Die Unteransprüche beschreiben bevorzugte Weiterbildungen.

Weiterhin sind eine Anordnung aus der Vorrichtung und dem angesteuerten Fluid-Magnetventil sowie ein Fluidsystem mit dem Fluid-Magnetventil und der Vorrichtung, insbesondere mit einem oder mehreren Fluid-Verbrauchern wie z.B. einem pneumatischen Bremssystem, sowie ein Fahrzeug mit dem Fluidsystem vorgesehen.

Das Fluid-Magnetventil ist insbesondere ein pneumatisches Magnetventil, zum Einsatz in einem Druckluft-System eines Fahrzeugs. Erfindungsgemäß wird erkannt, dass die Stromregelung insbesondere in einem oberen Temperaturbereich als sinnvoll anzusehen ist und insbesondere der Stromverbrauch und somit der Energieverbrauch gering gehalten werden kann, und weiterhin auch eine Temperaturbelastung durch unnötig hohe Ströme vermieden oder zumindest gering gehalten werden kann. Somit ist hierzu ein erster Betriebsmodus vorgesehen. Hierbei wird insbesondere auch erkannt, dass die Stromregelungen eine direkte Einstellung der Magnetkraft ermöglichen, da die Magnetkraft proportional zum Strom - und nicht der Spannung - ist. Der temperaturabhängige Ohmsche Widerstand der Spulenanordnung sowie auch entsprechender weiterer elektrischer Bauteile im Stromkreis kann durch Ausregelung des Spulenstroms direkt angepasst werden, so dass jeweils der erforderliche Spulenstrom, sowohl für den Schaltvorgang, d. h. den Anzugsstrom, als auch den Haltestrom eingestellt werden kann.

Weiterhin wird erfindungsgemäß jedoch auch erkannt, dass in einem unteren Temperaturbereich eine derartige Stromregelung nachteilhaft sein kann, da bei der niedrigen Temperatur der Spulenstrom nicht automatisch durch den niedrigeren Widerstand steigt und somit auch keine Reserve aufbaut wird, um die temperaturbedingten Probleme bei niedrigen Temperaturen, insbesondere Frost, auszugleichen; so führen die schlechtere Schmierung durch die höhere Viskosität der Schmiermittel und ggf. Klebe-Effekte bzw. Sticking-Effekte an den Gummidichtungen eventuell dazu, dass der Anker nicht oder nicht schnell genug, d.h. nicht mit hinreichender Sicherheit verstellt wird. Weiterhin wird auch erkannt, dass ein höherer Spulenstrom bei geringeren Temperaturen, insbesondere auch bei Frost, durchaus vorteilhaft ist, da er zu einer lokalen Heizung und somit Erwärmung der Spulenanordnung mitsamt des durch diese verstellten Ankers und der Dichtungen führen kann. Somit kann ein innerer Bereich des Magnetventils lokal geheizt werden.

Daher wird erfindungsgemäß in einem unteren Temperaturbereich vorteilhafterweise die Stromregelung nicht mehr vorgenommen, d.h. der erste Betriebsmodus nicht mehr angesetzt, sondern ein zweiter Betriebsmodus gewählt, bei dem ein geeigneter Spannungswert eingestellt wird. Gemäß einer besonders bevorzugten Ausbildung wird hier der Spannungswert konstant gesteuert, d. h. ein konstanter Spannungswert eingestellt. Somit wird aufgrund des bei fallenden Temperaturen sinkenden Ohmschen Widerstandes der erzeugte Spulenstrom mit der fallenden Temperatur steigen und somit eine verstärkte Heizwirkung ausbilden und auch stärkere Kräfte zum Verstellen des Ankers ermöglichen.

Hierbei ist ein Betriebskriterium vorgesehen zum Entscheiden, ob der erste Betriebsmodus oder der zweite Betriebsmodus vorzusehen ist. Gemäß einer besonders bevorzugten Ausbildung kann dieses Betriebskriterium ohne direkte Messung der Spulentemperatur angesetzt werden, d.h. die Wahl zwischen den Betriebsmodi ohne Verwertung eines direkten Messwertes der Spulentemperatur erfolgen. Hierbei wird erkannt, dass die Messung der Spulentemperatur nicht unproblematisch ist, da direkte Messungen der Spulentemperatur schwierig sind und eine Messung außerhalb der Spule ungenau ist, da externe Temperaturen sich von der aktuellen Spulentemperatur deutlich unterscheiden. Es wird vielmehr erkannt, dass als Betriebskriterium die eingestellte effektive Ansteuerspannung herangezogen werden kann:
Wenn vom ersten Betriebsmodus der Stromregelung im oberen Temperaturbereich ausgegangen wird, so fällt zu geringeren Temperaturen hin mit dem Ohmschen Widerstand der Spulenanordnung auch die eingeregelte Ansteuerspannung. Somit kann eine Grenzspannung, d.h. ein Grenzwert der Ansteuerspannung als Betriebskriterium herangezogen werden; sobald die Ansteuerspannung die Grenzspannung unterschreitet oder erreicht, kann in den zweiten Betriebsmodus übergegangen werden und diese Ansteuerspannung konstant gehalten werden.

Hierbei können im zweiten Betriebsmodus auch unterschiedliche Unter-Bereiche eingestellt werden. So können insbesondere Unter-Bereiche mit jeweils konstanter Spannungsregelung eingestellt werden. So können unter Ermittlung des eingestellten Spulenstroms Abschätzungen der jeweiligen Spulentemperatur erfolgen, da der Spulenstrom zu kleineren Temperaturen hin ansteigt, so dass hier unterschiedliche Ansteuerspannungen eingestellt werden können, um entsprechend für die unterschiedlichen nachteilhaften Effekte in dem unteren Temperaturbereich unterschiedliche Einstellungen vorzunehmen, z.B. unterschiedliche Kräfte entgegenzusetzen. So treten z.B. Sticking-Effekte der Gummidichtungen insbesondere bei Temperaturen im Frostbereich auf, so dass in einem unteren Temperatur-Unterbereich eine höhere effektive Ansteuerspannung eingestellt werden kann.

Somit kann der zweite Betriebsmodus auch in Unter-Betriebsmodi unterteilt werden.

Erfindungsgemäß werden einige Vorteile erreicht: Es können Vorteile der Stromregelung erreicht werden, insbesondere die genaue Einregelung eines Stromwerts unter Vermeidung eines unnötigen Stromverbrauchs und unnötiger thermischer Belastung durch zu hohe Ströme. Die Stromregelung kann hierbei in einem großen oberen Temperaturbereich, z. B. ab einem Temperaturwert über 20° C erfolgen.

Weiterhin kann in dem unteren Temperaturbereich durch Einstellung des zweiten Betriebsmodus die nachteilhafte Auswirkung der zu geringen Ströme einer Stromregelung vermieden werden, und sowohl eine geeignete Heizwirkung als auch die Ausbildung höherer Kräfte gegen eventuelle Reibungseffekte bzw. Klebeeffekte erreicht werden. Eine derartige Spannungssteuerung kann insbesondere durch Einstellung eines konstanten Spannungswerts somit mit geringem Hardwareaufwand und einfachen Steuerungsmaßnahmen erfolgen.

Indem ein Übergang zwischen dem ersten Betriebsmodus und zweiten Betriebsmodus mit stetiger Ansteuerspannung, d.h. ohne Sprung in der Ansteuerspannung eingestellt wird, treten keine unnötig hohen bzw. sprungartigen Belastungen auf.

Durch die Ausbildung des Betriebskriteriums in Abhängigkeit lediglich der Ansteuerspannung kann eine sichere und genaue Ermittlung, auch ohne unnötige Messung einer Spulentemperatur, erreicht werden.

Somit wird auch ein Fluidsystem mit einem sicheren Fluid-Magnetventil ermöglicht, das einen geringen Energieverbrauch und eine hohe Temperaturstabilität und somit einen sicheren Betrieb ermöglichen. Dies ist insbesondere in der Anwendung in einem Fahrzeug vorteilhaft, da hier eine variable Systemspannung je nach Belastung und Versorgungssituation, z.B. ein- oder ausgeschaltetem Generator und unterschiedlichen elektrischen Verbrauchern, zur Verfügung steht und somit die Stromregelung in dem hohen Temperaturbereich diese Probleme der unsicheren Systemspannung vermeidet und in dem unteren Temperaturbereich den kleiner werdenden Widerstand nutzt, um Schaltstromreserven aufzubauen.

In das Betriebskriterium kann weiterhin auch ein Vergleich oder eine Abhängigkeit von Temperaturwerten wie insbesondere der Umgebungstemperatur und/oder eine Gerätetemperatur oder Spulentemperatur aufgenommen werden.

Das Fluidsystem kann insbesondere ein Druckluftsystem sein, d.h. mit einem pneumatischen Magnetventil als Fluid-Magnetventil. Grundsätzlich ist aber auch die Ausbildung in einem Hydrauliksystem möglich.

Die Erfindung wird im Folgenden anhand der beiliegenden Zeichnungen an einigen Ausführungsformen näher erläutert. Es zeigen:
- Fig. 1: pneumatische Magnetventile als Beispiele eines Fluid-Magnetventils; 1a) ein 2/2-Ventil, 1b) ein 3/2-Ventil und c) einen Schnitt durch eine Ausführungsform eines 3/2-Ventils;
- Fig. 2: ein Kurvendiagramm der Steuerspannung und des Spulenstroms in Abhängigkeit der Temperatur;
- Fig. 3: ein Diagramm einer Ausführungsform mit einigen Verfahrensschritten;
- Fig. 4: eine Ausführungsform einer Hardware-Ausbildung;
- Fig. 5: ein Flussdiagramm gemäß einer Ausführungsform des erfindungsgemäßen Verfahrens.

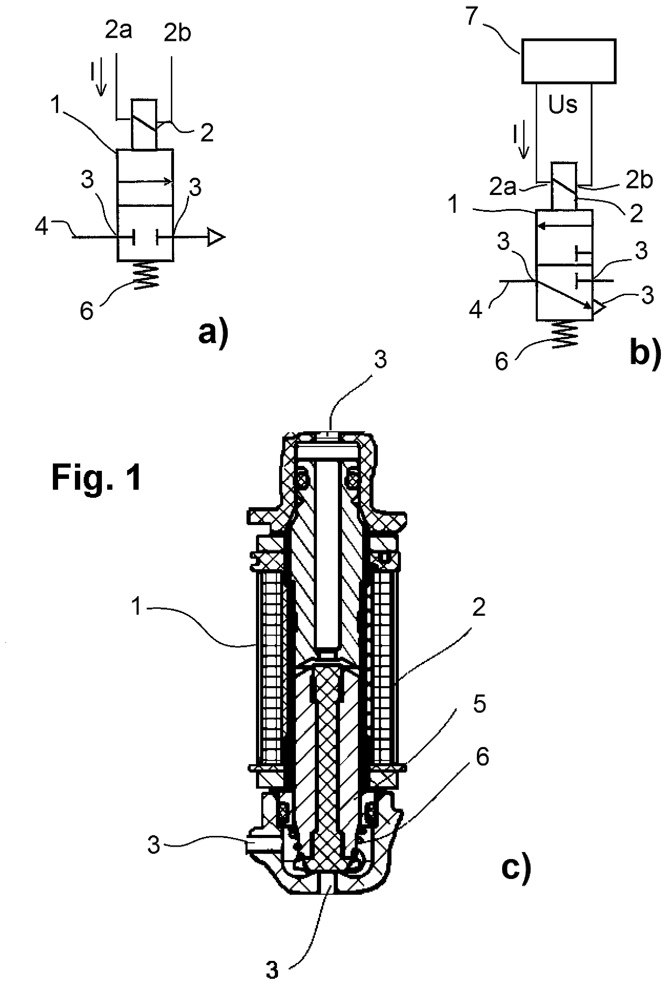

Ein pneumatisches Magnetventil 1 weist gemäß dem Blockschaltbild der Figur 1a) und dem beispielhaften Schnitt der Figur 1b) eine Spulenanordnung (Solenoid) 2 mit Spulenanschlüssen 2a, 2b und Pneumatik-Anschlüsse 3 für Pneumatikleitungen 4 auf. Gemäß der Schnittdarstellung der Figur 1c) ist hierbei im Allgemeinen durch Bestromung der Spulenanordnung 2 ein Anker 5 verstellbar, der im Allgemeinen durch eine Feder 6 in eine Grundstellung vorgespannt ist und bei Bestromung in die betätigte Stellung verstellt wird.

Bei Bestromung der Spulenanordnung 2 wird der Anker 5 zunächst in einem ersten Schaltmodus S1, dem Schaltvorgang (pull-in) mittels eines Schaltstroms IA (Anzugstrom, pull-in current) von der Grundstellung (ersten Schaltstellung) in die zweite Schaltstellung gegen die Federspannung der Feder 6 verstellt; nachfolgend wird der Anker 5 in einem zweiten Schaltmodus S2, dem Halte-Modus (hold) mittels eines Haltestroms **IH** gehalten, wobei im Allgemeinen IH< IA.

Das pneumatische Magnetventil 1 kann zum Beispiel gemäß Fig. 1a) als 2/2-Ventil, d. h. Sperrventil zum Sperren und Durchlassen eines Pneumatikflusses, oder zum Beispiel gemäß Fig. 1b) auch als 3/2-Schaltventil ausgelegt sein. Das Magnetventil 1 kann grundsätzlich auch als Hydraulik-Ventil ausgebildet sein.

Die Ansteuerung des Magnetventils 1 erfolgt über eine in Figur 1 allgemein dargestellte Ansteuerschaltung 7, die insbesondere eine effektive Ansteuerspannung UA als Gleichspannung mittels Pulsbreitenmodulation (PWM) ausgibt. Hierzu wird eine Systemspannung Us in zeitlichen Pulsen bzw. getaktet ausgegeben, wobei die effektiv angelegte Ansteuerspannung UA sich als Zeitanteil bzw. relative Pulsbreite PW ergibt, wobei die relative Pulsbreite PW grundsätzlich zwischen 0 % und 100 % variiert werden kann. Somit gilt UA= Us*PW.

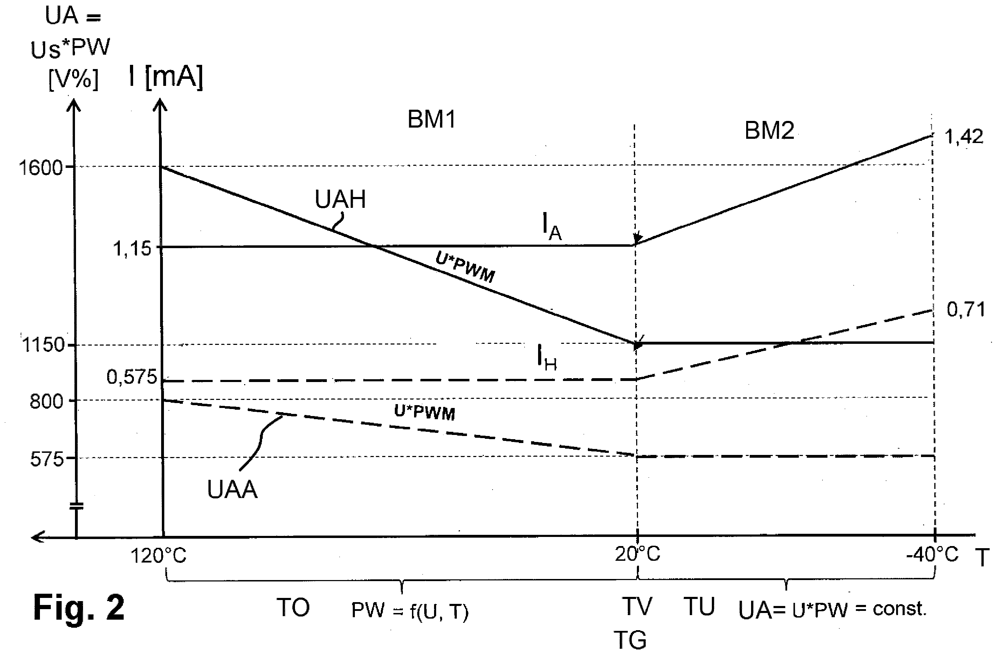

Gemäß Figur 2 sind zwei Betriebsmodi BM1 und BM2 zum Ansteuern der Spulenanordnung 2 vorgesehen. Hierbei können beide Betriebsmodi, d. h. der erste Betriebsmodus BM1 und der zweite Betriebsmodus BM2, grundsätzlich in beiden Schaltmodi, d. h. dem ersten Schaltmodus S1 des aktiven Schaltens ( pull-in) für den Anzugvorgang des Ankers 5, und auch dem zweiten Schaltmodus S2, d. h. dem Haltemodus (Hold) zum Halten des Ankers 5 in der zweiten Schaltstellung, durchgeführt werden. Entsprechend sind in Figur 2 auch beide Schaltmodi S1 und S2 dargestellt. Gemäß Figur 2 ist auf der Abszisse bzw. horizontalen Achse die Spulentemperatur T (nach links steigend) der Spulenanordnung 2 dargestellt, die vorzugsweise bei den hier gezeigten Ausführungsformen nicht durch einen zusätzlichen Temperatursensor gemessen wird. Weiterhin sind in Figur 2 zwei vertikale Achsen bzw. Ordinaten dargestellt:
- die Ansteuerspannung UA, die sich wie oben ausgeführt als Produkt der Systemspannung Us und dem Zeitanteil PW ergibt, sowie
- der durch die Spulenanordnung 2 fließende Spulenstrom I.

Somit sind in Figur 2 für den ersten Schaltmodus S1, d. h. den Schaltvorgang oder Anzugvorgang des aktiven Verstellens des Ankers 5 der Schaltstrom (Anzugstrom) IA und die hierzu angelegte Anzug-Ansteuerspannung UAA und für den zweiten Schaltmodus S2 entsprechend der Haltestrom IH und die hierzu angelegte Halte-Ansteuerspannung UAH dargestellt.

Wie aus Figur 2 zu entnehmen ist, ist der erste Betriebsmodus BM1 in einem oberen Temperaturbereich TO (upper temperature) und der zweite Betriebsmodus BM2 in einem unteren Temperaturbereich TU (lower temperature) vorgesehen, die z. B. bei einer Grenztemperatur TG = 20° C, also z. B. etwa Raumtemperatur, getrennt sind.

In dem ersten Betriebsmodus BM1 erfolgt eine Stromregelung, insbesondere unter Einregelung eines konstanten Stromwerts für den Schaltstrom IA oder den Haltestrom IH. Somit ist in der gezeigten Ausführungsform in dem ersten Betriebsmodus BM1 vorgesehen, den Schaltstrom IA (Anzugsstrom) auf den Stromwert 1,15 mA einzuregeln. Hierzu wird die Ansteuerspannung UA somit entsprechend eingestellt:
Für den Schaltstrom IA wird der Stromwert 1,15 mA eingeregelt, sodass die Ansteuerspannung UA entsprechend angepasst bzw. eingeregelt wird. Der ohmsche Widerstand R der Spulenanordnung 2 ist temperaturabhängig, wobei er im Allgemeinen im Wesentlichen linear mit der Temperatur ansteigt, insbesondere auch in dem oberen Temperaturbereich TO zwischen 20° C und 120° C. Somit wird beim Regeln (loop control) des Spulenstroms I jeweils eine Ansteuerspannung UA eingestellt, die in diesem Temperaturbereich zu tieferen Temperaturen hin abfällt, bzw. mit der Temperatur einen linearen Anstieg aufweist.

In dem zweiten Betriebsmodus BM2 wird die Ansteuerspannung UA eingestellt. Vorteilhafterweise wird sie konstant eingestellt, wie insbesondere aus Figur 2 zu erkennen ist: die effektive Ansteuerspannung UA = U x PW liegt auf einem konstanten Wert. Entsprechend ändert sich der Spulenstrom I in Abhängigkeit des ohmschen Widerstandes R; somit gilt I = UA / R, sodass in dem Diagramm der Figur 2 der Spulenstrom I in beiden Schaltmodi zu tieferen Spulentemperaturen T hin ansteigt, entsprechend dem linearen Abfall des ohmschen Widerstandes R mit niedriger Spulentemperatur T bzw. dem linearen Anstieg des ohmschen Widerstandes mit steigender Spulentemperatur T.

Die beiden Betriebsmodi BM1 und BM2 werden vorteilhafterweise stetig ineinander übergeführt, sodass insbesondere der Spulenstrom I im Übergangsbereich stetig geändert wird.

In Figur 2 sind die elektrischen Werte des ersten Schaltmodus S1, d. h. der Schaltstrom IA und die Schalt-Ansteuerspannung UAA durch gestrichelte Linien dargestellt und liegen bei höheren Werten als die entsprechenden elektrischen Werte des zweiten Schaltmodus S2, d. h. des Haltemodus, die der Federspannung der Feder 6 entgegenwirken und durch feste Linien dargestellt sind als Haltestrom IH und Halte-Ansteuerspannung UAH.

Die angezeigten Dimensionierungen sind für ein pneumatisches Magnetventil 1 einer pneumatischen Schaltung eines Nutzfahrzeugs vorgesehen, bei dem im ersten Schaltmodus S1 zum Verstellen des Ankers 5 in dem ersten Betriebsmodus BM1, d. h. im oberen Temperaturbereich TO zwischen 120°C und 20°C, ein Schaltstrom (Anzugstrom) IA von 1,15 mA konstant geregelt wird, indem durch die Pulsbreitenmodulation PWM die Ansteuerspannung UA angepasst wird. Die Prozent-Werte bzw. relativen Pulsbreiten PW der PWM-Regelung hängen dabei von der jeweiligen Systemspannung Us ab; diese kann im Fahrzeug wiederum von unterschiedlichen Einflüssen abhängen, z. B.
- der aktuellen Batteriespannung,
- ob gerade der Generator (Lichtmaschine) aktiv ist und in das Bordnetz eine hohe Ladespannung von zum Beispiel 28,8 V einspeist oder nicht, und
- den ohmschen Widerständen
- dem aktuellen Verbrauch der anderen Verbraucher.

Somit wird die aktuelle Systemspannung Us, die der Ansteuerschaltung zur Verfügung steht, über die Pulsbreitenmodulation PWM entsprechend auf die geeignete Ansteuerspannung UA eingestellt. Bei T = 120°C liegt der Wert UA = U x PW hier bei 1.600, und fällt entsprechend linear bis T = 20°C auf zum Beispiel den Wert UA = 1150 ab. Im zweiten Betriebsmodus BM2 wird wie oben beschrieben die Ansteuerspannung UA auf diesem konstanten Wert der Anzug-Ansteuerspannung UAA eingestellt; entsprechend steigt der Schaltstrom IA, der in dem oberen Temperaturbereich TO durch den ersten Betriebsmodus BM1 konstant geregelt wurde, hier von IA = 1,15 mA bei 20° C, d. h. im Übergangsbereich, an auf z. B. IA = 1,42 mA bei T = -40° C.

Die Einstellung bzw. Ausregelung durch PWM ergibt z. B. folgende Werte:
Bei T = 120° C wird zur Einregelung des Schaltstroms IA = 1,15 mA
bei einer Systemspannung Us = 32 V eine PWM-Breite PWM32 = 50 %,
bei Us = 24 V eine PWM-Breite PWM24 = 67 %, und
bei einer Systemspannung von Us = 16 V eine PWM-Breite PWM16 = 100 % eingeregelt;
diese Werte fallen dann bei entsprechend fallender Spulentemperatur T in dem ersten Betriebsmodus BM1 bis zur unteren Grenze bei T = 20° C auf die Werte PWM32 = 36 %, PWM24 = 48 % und PWM 6 = 72 %; in dem zweiten Betriebsmodus BM2 bleiben diese Pulsbreiten entsprechend gleich.

Im zweiten Schaltmodus S2, d. h. dem Haltemodus, werden bei T = 120° C zur Einstellung des Haltestroms IH = 0,575 mA entsprechend wiederum PWM-Werte von PWM32 = 25 %, PWM24 = 33 % und PWM16 = 50 % eingestellt, die dann in dem ersten Betriebsmodus BM1 bei fallender Spulentemperatur T bis zu T = 20° C auf PWM-Werte von PWM 32 = 18 %, PWM 24 = 24 % und PWM 16 = 36 % heruntergeregelt werden, wobei diese Werte dann entsprechend im zweiten Betriebsmodus BM2, d. h. dem unteren Temperaturbereich TU bis T = -40° C konstant eingestellt werden.

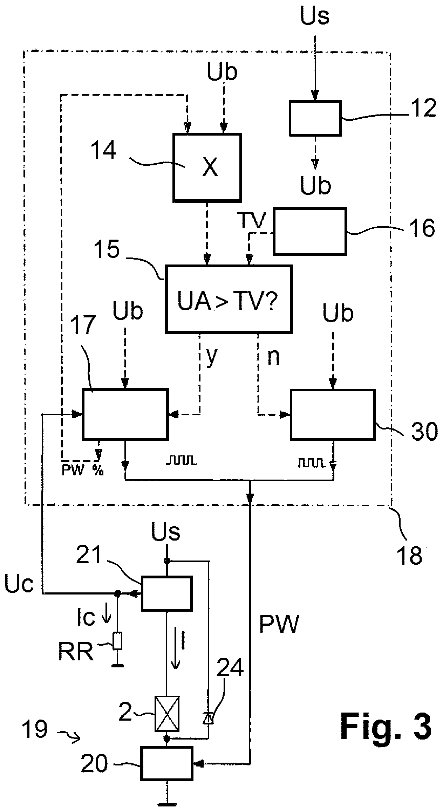

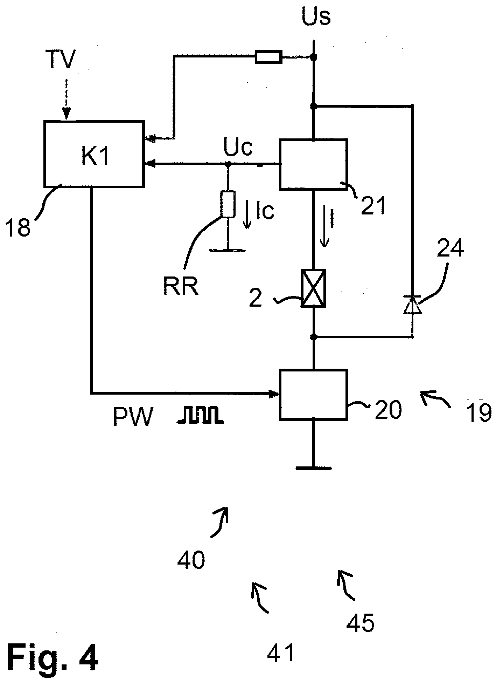

Figur 3 zeigt ein Schaltdiagramm der Vorrichtung und des Verfahrens einer derartigen Ausführungsform; Figur 4 zeigt die Ausbildung der Fig. 3 als allgemeines Blockschaltbild.

Gemäß Figur 3 wird die aktuelle Systemspannung Us ermittelt, indem sie über einen Analog-Digital-Wandler 12 digitalisiert wird und somit als digitaler Wert Ub vorliegt, der in der Recheneinrichtung 14 mit einer aktuellen PWM-Breite PW multipliziert wird, so dass die aktuelle Ansteuerspannung UA = Ub x PW an eine Vergleichseinrichtung 15 ausgegeben wird, die weiterhin eine Grenzspannung TV (threshold value) von z. B. einer Speichereinrichtung 16 aufnimmt und diese Werte miteinander vergleicht, d. h. UA > TV? ermittelt. Im ersten Fall y, d. h. UA > TV, wird somit erkannt, dass die Schaltung sich im oberen Temperaturbereich TO befindet und somit der erste Betriebsmodus BM1 einzustellen ist, so dass eine Regeleinrichtung 17 die Stromregelung durchführt und den jeweils aktuell zur Regelung eingestellten PWM-Breitenwert PW wiederum als Information an die Recheneinrichtung 14 ausgibt. Somit wird in dem ersten Betriebsmodus BM1 die Regelung durch den geschlossenen Regelkreis ermöglicht, wobei die aus der Abweichung des Ist-Stromwertes zum Soll-Stromwert errechnete Pulsbreite PW dann einer Treiberschaltungs-Einrichtung 19 zur Ansteuerung der Spulenanordnung 2 zugeführt wird.

Hierzu weist die Treiberschaltungs-Einrichtung 19 eine untere Treiberschaltung 20 (LSS, low side switch) auf, der vorzugsweise nach Fig. 3 die errechnete Pulsbreite PW zugeführt wird, wobei eine obere Treiberschaltung 21 (HSS, high side switch) der Treiberschaltungs-Einrichtung 19 entsprechend an die Systemspannung Us angeschlossen ist, mit einer Freilaufdiode 24 zwischen dem Ausgang der unteren Treiberschaltung 20 und dem Anschluss der Systemspannung Us, für den Freilaufstrom der Spulenanordnung 2.

Die untere Treiberschaltung 20 bzw. low side switch und die obere Treiberschaltung 21 bzw. high side switch sind hierbei in üblicher Weise zur beidseitigen Ansteuerung der Spulenanordnung 2 vorgesehen. Der Freilaufpfad über die Freilaufdiode 24 dient zur Rückspeisung der in der Spule befindlichen Energie in das System.

Zur Messung des Spulenstroms I ist gemäß dieser Ausführungsform ein Kontrollausgang der oberen Treiberschaltung 21 (HSS) vorgesehen, der einen Kontrollstrom Ic ausgibt, der als anteiliger Stromwert von z. B. 1/10 des Spulenstroms I, d.h. Ic= I/10 gebildet wird, wobei dieser Kontrollstrom Ic über einen Referenzwiderstand RR auf Masse ausgegeben wird. Somit kann eine Messspannung oder Kontrollspannung Uc als Uc = Ic x RR am Kontrollausgang abgegriffen und der Regeleinrichtung 17 zugeführt werden, die somit den Spulenstrom I indirekt misst und entsprechend die Pulsbreite PW als relativen Wert zwischen 0 % und 100 % einstellt.

Falls in der Vergleichseinrichtung 15 in dem Vergleich UA > TV auf Nein entschieden wird, d. h. die aktuelle Ansteuerspannung UA kleiner als die Grenzspannung TV ist, wird entsprechend der Verzweigung n nachfolgend durch die Spulenstrom-Steuereinrichtung 30 der zweite Betriebsmodus BM2 eingestellt, d. h. als Steuerung zur Ausgabe der Pulsbreite PW, die ungefähr umgekehrt proportional zur Systemspannung ist, an die untere Treibereinrichtung 20.

Alternativ zu der Messschaltung durch den Referenzwiderstand RR mit dem Ausgang für den Kontrollstrom Ic kann z. B. auch eine Strommessung durch einen Shunt-Widerstand erfolgen, der z.B. zwischen Masse und der unteren Treiberschaltung 20 (low side switch) geschaltet ist, so dass der Spulenstrom I als Spannungsabfall am Shunt-Widerstand gemessen wird.

Gemäß Fig. 3 wird die Systemspannung Us über den Analog-Digital-Wandler 12 als digitaler Wert Ub der Steuereinrichtung 18, die insbesondere als Mikrocontroller ausgebildet ist, eingegeben wird, wobei die Steuereinrichtung 18 den Wert für die Grenzspannung TV aus einem internen oder externen Speichereinrichtung 16 ausliest, und
wobei die Steuereinrichtung 18 weiterhin gemäß dem allgemeinen Blockschaltbild der Fig. 4 die Kontrollspannung Uc aufnimmt und gemäß dem Betriebskriterium K1 nachfolgend den entsprechenden Betriebsmodus BM1 oder BM2 einstellt, wobei sie entsprechend entweder direkt die Ansteuerspannung UA ausgibt oder ein Steuersignal mit der relativen Pulsbreite PW an die untere Treiberschaltung 20 ausgibt, die dann entsprechend den Spulenstrom I zwischen der oberen Treiberschaltung 21, der die Last darstellenden Spulenanordnung 2 und der unteren Treiberschaltung 20 einstellt.

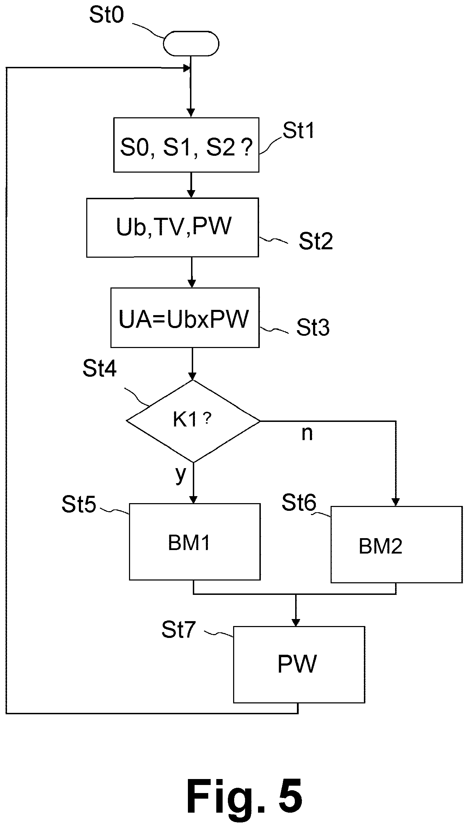

Das erfindungsgemäße Verfahren ist somit beispielhaft in Figur 5 dargestellt.

Nach dem Start in Schritt St0 wird nachfolgend in Schritt St1 der Schaltmodus ermittelt, d. h. ob
- gemäß dem Ruhe-Schaltmodus S0 das Magnetventil 2 gar nicht anzusteuern ist und somit in seiner nicht bestromten Grundstellung bleibt, oder
- ein Anzugvorgang bzw. Schaltvorgang und somit gemäß dem Schaltmodus S1 ein Verstellvorgang zur Verstellung des Ankers 5 einzustellen ist, oder
- der Haltemodus vorliegt und als Schaltmodus S2 die Spulenanordnung 2 mit einem Haltestrom IH anzusteuern ist.

In Schritt St2 werden nachfolgend die zur Verfügung stehenden Systemgrößen und Messgrößen eingelesen, d. h. insbesondere wird die Systemspannung Us durch Digitalisierung mittels dem AD-Wandler 12 als digitaler Wert Ub eingelesen, weiterhin wird die Grenzspannung TV gegebenenfalls eingelesen, und eine aktuell eingestellte Pulsbreite PW wird gegebenenfalls eingelesen. In dem nachfolgenden Ermittlungsschritt St3 (Rechenschritt) wird hieraus die Ansteuerspannung UA ermittelt als UA = Ub x PW, wobei die beiden Schritte St2 und St3 entsprechend auch kombiniert erfolgen können.

Nachfolgend wird in dem Entscheidungsschritt St4 das Betriebskriterium K1 überprüft, d. h. ob die Ansteuerspannung UA oberhalb der Grenzspannung TV liegt, und in Abhängigkeit davon wird entsprechend nachfolgend durchgeführt:
- falls im Entscheidungsschritt St4 die Grenzspannung TV überschritten ist, wird gemäß der Verzweigung y nachfolgend im Regelschritt St5 der erste Betriebsmodus BM1 der Stromregelung durchgeführt und hierzu entsprechend gemäß Figur 3 die dort beschriebenen Teil-Schritte durchgeführt, d.h. der Messung des aktuellen Spulenstroms I z.B. über den Spannungsabfall Uc= Ic*RR des Nebenausgangs oder einen Shuntwiderstand, mit nachfolgender Regelung bzw. Einstellung der relativen Pulsbreite PW als geschlossener Regelkreis;
- falls im Entscheidungsschritt St4 die Grenzspannung TV unterschritten ist, wird gemäß der Verzweigung n in dem Steuerschritt St6 der zweite Betriebsmodus BM2 durchgeführt und somit eine konstante Ansteuerspannung UA eingestellt, d.h. die relative Pulsbreite PW wird somit als Funktion der Systemspannung Us bzw. ihres digitalisierten Wertes Ub eingestellt.

In beiden Fällen wird somit nachfolgend in Schritt St7 jeweils die Spulenanordnung 2 über die Treiberschaltungs-Einrichtung 19 angesteuert,
wobei die untere Treiberschaltung 20 der Treiberschaltungs-Einrichtung 19 durch die ermittelte relative Pulsbreite PW eingestellt wird,
und das Verfahren wiederum vor den Schritt St2, insbesondere vor den Schritt St1, zurückgesetzt.

### Bezugszeichenliste (Teil der Beschreibung)

- 1: Fluid-Magnetventil, pneumatisches Magnetventil
- 2: Spulenanordnung (Solenoid-Anordnung)
- 2a, 2b: Spulenanschlüsse
- 3: Pneumatik-Anschlüsse
- 4: Pneumatikleitungen
- 5: Anker
- 6: Feder
- 7: Ansteuerschaltung

- 12: Analog-Digital-Wandler
- 14: Recheneinrichtung
- 15: Vergleichseinrichtung
- 16: Speichereinrichtung
- 17: Regeleinrichtung
- 18: Steuereinrichtung
- 19: Treiberschaltungs-Einrichtung aus den Treiberschaltungen 20, 21
- 20: untere Treiberschaltung
- 21: obere Treiberschaltung
- 24: Freilaufdiode
- 30: Spulenstrom-Steuereinrichtung
- 40: Fluidsystem, insbesondere Druckluft-System
- 41: Fahrzeug
- 45: Vorrichtung

- BM1: erster Betriebsmodus
- BM2: zweiter Betriebsmodus

- I: Spulenstrom
- IA: Schaltstrom (Anzugstrom, pull-in current)
- IH: Haltestrom
- Ic: Kontrollstrom

- K1: Betriebskriterium
- PW: Zeitanteil, Pulsbreite
- R: ohmscher Widerstand
- RR: Referenzwiderstand

- S1: erster Schaltmodus S1
- S2: zweiter Schaltmodus S2

- T: Spulentemperatur
- TG: Grenztemperatur
- TO: oberer Temperaturbereich
- TU: unterer Temperaturbereich
- TV: Grenzspannung

- UA: effektive Ansteuerspannung
- Us: Systemspannung
- Ub: digitalisierter Wert der Systemspannung Us
- Uc: Kontrollspannung
- UAA: Anzug-Ansteuerspannung
- UAH: Halte-Ansteuerspannung

## Patentansprüche

1. Verfahren zum Ansteuern eines Fluid-Magnetventils (1) in einem Fluidsystem (40) eines Fahrzeugs (41),
bei dem zur Einstellung eines Schaltmodus (S0, S1, S2) eine Ansteuerspannung (UA) an eine Spulenanordnung (2) des Fluid-Magnetventils (1) angelegt wird,
wobei
die Ansteuerspannung (UA) in Abhängigkeit eines Betriebskriteriums (K1) in mindestens zwei unterschiedliche Betriebsmodi (BM1, BM2) eingestellt wird,
wobei in einem ersten Betriebsmodus (BM1) eine Stromregelung des durch die Spulenanordnung (2) fließenden Spulenstroms (I) vorgenommen wird und
in einem von dem ersten Betriebsmodus (BM1) unterschiedlichen zweiten Betriebsmodus (BM2) die Ansteuerspannung (UA) ohne Stromregelung eingestellt wird, **dadurch gekennzeichnet, dass** das Betriebskriterium (K1) einen Vergleich einerseits der aktuellen Ansteuerspannung (UA) mit andererseits einer Grenzspannung (TV) aufweist oder durch den Vergleich gebildet ist, wobei in einem ersten Fall, dass die Ansteuerspannung (UA) die Grenzspannung (TV) überschreitet, der erste Betriebsmodus (BM1) eingestellt wird, und
in einem zweiten Fall, dass die Ansteuerspannung (UA) die Grenzspannung (TV) unterschreitet, der zweite Betriebsmodus (BM2) eingestellt wird.

2. Verfahren nach Anspruch 1, **dadurch gekennzeichnet, dass** in dem zweiten Betriebsmodus (BM2) die Ansteuerspannung (UA) unabhängig vom Spulenstrom (I) eingestellt wird, insbesondere konstant eingestellt wird.

3. Verfahren nach einem der vorherigen Ansprüche, **dadurch gekennzeichnet, dass** das Betriebskriterium (K1) ohne Messung einer aktuellen Spulentemperatur (T) vorgesehen ist.

4. Verfahren nach einem der vorherigen Ansprüche, **dadurch gekennzeichnet, dass** das Fluid-Magnetventil (1) zwischen einer durch eine Feder (6) federvorgespannten Grundstellung und einer aktivierten Stellung verstellbar ist,
wobei die Spulenanordnung (2) in mindestens folgenden Schaltmodi (S0, S1, S2) ansteuerbar ist:
einem Ruhe-Schaltmodus (S0) ohne Bestromung der Spulenanordnung (2),
einem ersten Schaltmodus (S1) zur Einstellung eines Schaltstroms (IA) zum Verstellen eines Ankers (5) des Magnetventils (1) von der Grundstellung in die aktivierte Stellung, und
einem Haltemodus als zweiten Schaltmodus (S2) zur Einstellung eines Haltestroms (IH) zum Halten des Ankers (5) in der aktivierten zweiten Schaltstellung gegen die Federvorspannung,
wobei der Schaltstrom (IA) größer als der Haltestrom (IH) ist,
wobei in dem ersten und zweiten Schaltmodus (S1, S2) jeweils der Spulenstrom (I) in Abhängigkeit des Betriebskriteriums (K1) eingestellt wird.

5. Verfahren nach einem der vorherigen Ansprüche, **dadurch gekennzeichnet, dass** der erste Betriebsmodus (BM1) in einem oberen Temperaturbereich (TU) und der zweite Betriebsmodus (BM2) in einem unteren Temperaturbereich (TU) erfolgt, wobei eine Übergangstemperatur oder Grenztemperatur (TG) zwischen 10°C und 40°C, z.B. zwischen 15°C und 25°C liegt.

6. Verfahren nach einem der vorherigen Ansprüche, **dadurch gekennzeichnet, dass** in dem zweiten Betriebsmodus (BM2) mehrere Unter-Bereiche ausgebildet sind, wobei bei einem unteren Unter-Bereich ein anderer konstanter Spannungswert als in einem oberen Unter-Bereich mit kleinerem Spulenstrom (IA, IH) eingestellt wird.

7. Verfahren nach einem der vorherigen Ansprüche, **dadurch gekennzeichnet, dass** die Ansteuerspannung (UA) als effektive Ansteuerspannung (UA) durch Pulsbreitenmodulation aus einer vorliegenden Systemspannung (Ub) und einer einzustellenden relativen Pulsbreite (PW) erzeugt wird, z.B. durch Ausgabe einer Pulsbreiteninformation (PW) an eine Treiberschaltungs-Einrichtung (19) der Spulenanordnung (2), z.B. einer unteren Treiberschaltung (20) oder oberen Treiberschaltung (21) der Treiberschaltungs-Einrichtung (19).

8. Verfahren nach Anspruch 7, **dadurch gekennzeichnet, dass** die effektive Ansteuerspannung (UA) durch Messen einer vorliegenden Systemspannung (Us) mittels Analog-Digital-Konvertierung zu einem digitalen Betriebsspannungswert (Ub) und Multiplikation mit der eingestellten Pulsbreite (PW) ermittelt wird,
wobei im ersten Betriebsmodus (BM1) die Stromregelung durch die Ermittlung der effektiven Ansteuerspannung (UA) und Einstellung der Pulsbreite (PW) sowie Messung des Spulenstroms (IA), z.B. über einen Shunt-Widerstand oder Messung eines den Spulenstrom (IA) proportionalen Vergleichsstroms oder Kontrollstroms (Ic) erfolgt.

9. Verfahren nach einem der vorherigen Ansprüche, **dadurch gekennzeichnet, dass** als Fluid-Magnetventil ein pneumatisches Magnetventil (1) in einem Druckluft-System (40) eines Fahrzeugs angesteuert wird.

10. Vorrichtung (45) zum Ansteuern eines Fluid-Magnetventils (1) in einem Fluidsystem (40), insbesondere Druckluft-System eines Fahrzeugs (41), wobei die Vorrichtung (45) aufweist:
eine Treiberschaltungs-Einrichtung (19) zum Ansteuern einer Spulenanordnung (2) des Fluid-Magnetventils (1),
eine Steuereinrichtung (18), die ausgebildet ist zur Durchführung eines Verfahrens nach einem der vorherigen Ansprüche.

11. Vorrichtung (45) nach Anspruch 10, wobei die Steuereinrichtung (18) aufweist:
einen Analog-Digital-Konverter (12) zum Digitalisieren einer vorliegenden Systemspannung (Us) und Ermittlung eines digitalen Betriebsspannungswertes (Ub), und
eine Recheneinrichtung (14) und eine Vergleichseinrichtung (15) zur Bewertung des Betriebskriteriums (K1).

12. Vorrichtung (45) nach Anspruch 10 oder 11, **dadurch gekennzeichnet**, die Steuereinrichtung (18) eine Pulsbreite (PW) ermittelt und einstellt zur Ansteuerung der Treiberschaltungs-Einrichtung (19), zur Ausbildung einer Pulsbreitenmodulation für die Spulenanordnung (2).

13. Vorrichtung (45) nach einem der Ansprüche 10 bis 12, **dadurch gekennzeichnet, dass** die Treiberschaltungs-Einrichtung (19) eine untere Treiberschaltung (20) und obere Treiberschaltung (21) aufweist, zwischen denen die die Spulenanordnung (2) geschaltet ist,
wobei eine Reihenschaltung aus der oberen Treiberschaltung (21), der Spulenanordnung (2) und der unteren Treiberschaltung (20) an die Versorgungsspannung (Us) anlegbar ist.

14. Anordnung aus einer Vorrichtung (45) nach einem der Ansprüche 10 bis 13 und dem von der Vorrichtung (45) angesteuerten Fluid-Magnetventil (1) mit der Spulenanordung (2).

15. Fluidsystem (40) für ein Fahrzeug (41), das eine Anordnung nach Anspruch 14 und durch das Fluid-Magnetventil (1) geschaltete Fluid-Verbraucher aufweist.

16. Fahrzeug (41) mit einem Fluidsystem (40) nach Anspruch 15.

## Claims

1. Method for activating a fluid solenoid valve (1) in a fluid system (40) of a vehicle (41),
in which an activation voltage (UA) is applied to a coil arrangement (2) of the fluid solenoid valve (1) in order to set a switching mode (S0, S1, S2), wherein
the activation voltage (UA) is set in at least two different operating modes (BM1, BM2) depending on an operating criterion (K1),
wherein, in a first operating mode (BM1), current control of the coil current (I) flowing through the coil arrangement (2) is carried out, and
in a second operating mode (BM2) which is different from the first operating mode (BM1), the activation voltage (UA) is set without current control, **characterized in that**
the operating criterion (K1) comprises a comparison of the current activation voltage (UA) with a limit voltage (TV), or is formed by the comparison, wherein
in a first case, where the activation voltage (UA) exceeds the limit voltage (TV), the first operating mode (BM1) is set, and
in a second case, where the activation voltage (UA) falls below the limit voltage (TV), the second operating mode (BM2) is set.

2. Method according to claim 1, **characterized in that** in the second operating mode (BM2), the activation voltage (UA) is set independently of the coil current (I), in particular is set to be constant.

3. Method according to either of the preceding claims, **characterized in that** the operating criterion (K1) is provided without measuring a current coil temperature (T).

4. Method according to any of the preceding claims, **characterized in that** the fluid solenoid valve (1) is adjustable between a basic position spring-preloaded by a spring (6) and an activated position,
wherein the coil arrangement (2) can be activated in at least the following switching modes (S0, S1, S2):
a sleep switching mode (S0) without energization of the coil arrangement (2),
a first switching mode (S1) for setting a switching current (IA) for adjusting an armature (5) of the solenoid valve (1) from the basic position to the activated position, and
a holding mode as a second switching mode (S2) for setting a holding current (IH) for holding the armature (5) in the activated second switching position, counter to the spring preload,
wherein the switching current (IA) is greater than the holding current (IH), wherein in the first and the second switching mode (S1, S2), the coil current (I) is set depending on the operating criterion (K1) in each case.

5. Method according to any of the preceding claims, **characterized in that** the first operating mode (BM1) takes place in an upper temperature range (TU) and the second operating mode (BM2) takes place in a lower temperature range (TU), wherein a transition temperature or limit temperature (TG) is between 10°C and 40°C, e.g. between 15°C and 25°C.

6. Method according to any of the preceding claims, **characterized in that** in the second operating mode (BM2), a plurality of sub-ranges are formed, wherein in a lower sub-range, a different constant voltage value is set than in an upper sub-range with a smaller coil current (IA, IH).

7. Method according to any of the preceding claims, **characterized in that** the activation voltage (UA) is generated as an effective activation voltage (UA) by pulse width modulation from a present system voltage (Ub) and a relative pulse width (PW) to be set, e.g. by outputting pulse width information (PW) to a driver circuit device (19) of the coil arrangement (2), e.g. a lower driver circuit (20) or upper driver circuit (21) of the driver circuit device (19).

8. Method according to claim 7, **characterized in that** the effective activation voltage (UA) is determined by measuring a present system voltage (Us) by means of analog-digital conversion to a digital operating voltage value (Ub) and multiplication by the set pulse width (PW),
wherein in the first operating mode (BM1), the current control is carried out by determining the effective activation voltage (UA) and setting the pulse width (PW) as well as measuring the coil current (IA), e.g. via a shunt resistor or measuring a comparison current or control current (Ic) proportional to the coil current (IA).

9. Method according to any of the preceding claims, **characterized in that** a pneumatic solenoid valve (1) in a compressed air system (40) of a vehicle is activated as the fluid solenoid valve.

10. Apparatus (45) for activating a fluid solenoid valve (1) in a fluid system (40), in particular a compressed air system of a vehicle (41), wherein the apparatus (45) comprises:
a driver circuit device (19) for activating a coil arrangement (2) of the fluid solenoid valve (1),
a control device (18) which is designed to carry out a method according to any of the preceding claims.

11. Apparatus (45) according to claim 10, wherein the control device (18) comprises:
an analog-digital converter (12) for digitizing a present system voltage (Us) and determining a digital operating voltage value (Ub), and
a computing device (14) and a comparison device (15) for evaluating the operating criterion (K1).

12. Apparatus (45) according to claim 10 or 11, **characterized in that** the control device (18) determines and sets a pulse width (PW) for activating the driver circuit device (19) to form a pulse width modulation for the coil arrangement (2).

13. Apparatus (45) according to any of claims 10 to 12, **characterized in that** the driver circuit device (19) comprises a lower driver circuit (20) and an upper driver circuit (21), between which the coil arrangement (2) is connected,
wherein a series circuit comprising the upper driver circuit (21), the coil arrangement (2) and the lower driver circuit (20) can be connected to the supply voltage (Us).

14. Arrangement comprising an apparatus (45) according to any of claims 10 to 13, and the fluid solenoid valve (1) which has the coil arrangement (2) and is activated by the apparatus (45).

15. Fluid system (40) for a vehicle (41), which comprises an arrangement according to claim 14 and fluid consumers connected by the fluid solenoid valve (1).

16. Vehicle (41) comprising a fluid system (40) according to claim 15.

## Revendications

1. Procédé permettant de commander une électrovanne de fluide (1) dans un système de fluide (40) d'un véhicule (41),
dans lequel, pour la définition d'un mode de commutation (S0, S1, S2), une tension de commande (UA) est appliquée à un agencement de bobine (2) de l'électrovanne de fluide (1), dans lequel
la tension de commande (UA) est définie en fonction d'un critère de fonctionnement (K1) dans au moins deux modes de fonctionnement (BM1, BM2) différents,
dans lequel, dans un premier mode de fonctionnement (BM1), une régulation de courant du courant de bobine (I) circulant à travers l'agencement de bobine (2) est effectuée et
dans un second mode de fonctionnement (BM2) différent du premier mode de fonctionnement (BM1), la tension de commande (UA) est définie sans régulation de courant, **caractérisé en ce que**
le critère de fonctionnement (K1) présente une comparaison d'une part de la tension de commande (UA) réelle avec d'autre part une tension limite (TV) ou est formé par la comparaison, dans lequel
dans un premier cas, lorsque la tension de commande (UA) dépasse la tension limite (TV), le premier mode de fonctionnement (BM1) est défini, et
dans un second cas, lorsque la tension de commande (UA) est inférieure à la tension limite (TV), le second mode de fonctionnement (BM2) est défini.

2. Procédé selon la revendication 1, **caractérisé en ce que,** dans le second mode de fonctionnement (BM2), la tension de commande (UA) est définie indépendamment du courant de bobine (I), est en particulier définie constante.

3. Procédé selon l'une des revendications précédentes,
**caractérisé en ce que** le critère de fonctionnement (K1) est prévu sans mesure d'une température de bobine (T) réelle.

4. Procédé selon l'une des revendications précédentes,
**caractérisé en ce que** l'électrovanne de fluide (1) peut être déplacée entre une position de base précontrainte par un ressort (6) et une position activée,
dans lequel l'agencement de bobine (2) peut être commandé dans au moins les modes de commutation (S0, S1, S2) suivants :
un mode de commutation de veille (S0) sans alimentation en courant de l'agencement de bobine (2),
un premier mode de commutation (S1) permettant de définir un courant de commutation (IA) pour déplacer un induit (5) de l'électrovanne (1) de la position de base à la position activée, et
un mode de maintien, comme second mode de commutation (S2), permettant de définir un courant de maintien (IH) pour maintenir l'induit (5) dans la seconde position de commutation activée contre la précontrainte du ressort,
dans lequel le courant de commutation (IA) est supérieur au courant de maintien (IH), dans lequel le courant de bobine (I) est respectivement défini dans le premier et le second mode de commutation (S1, S2) en fonction du critère de fonctionnement (K1).

5. Procédé selon l'une des revendications précédentes,
**caractérisé en ce que** le premier mode de fonctionnement (BM1) intervient dans une plage de température supérieure (TU) et le second mode de fonctionnement (BM2) intervient dans une plage de température inférieure (TU), dans lequel une température de transition ou température limite (TG) est comprise entre 10 °C et 40 °C, par exemple entre 15 °C et 25 °C.

6. Procédé selon l'une des revendications précédentes,
**caractérisé en ce que** plusieurs sous-plages sont formées dans le second mode de fonctionnement (BM2), dans lequel une valeur de tension constante différente est définie dans une sous-plage inférieure que dans une sous-plage supérieure avec un courant de bobine (IA, IH) plus faible.

7. Procédé selon l'une des revendications précédentes,
**caractérisé en ce que** la tension de commande (UA) est générée en tant que tension de commande (UA) effective par modulation de largeur d'impulsion à partir d'une tension de système (Ub) présente et d'une largeur d'impulsion relative (PW) à définir, par exemple en délivrant une information de largeur d'impulsion (PW) à un moyen formant circuit d'attaque (19) de l'agencement de bobine (2), par exemple un circuit d'attaque inférieur (20) ou un circuit d'attaque supérieur (21) du moyen formant circuit d'attaque (19).

8. Procédé selon la revendication 7, **caractérisé en ce que** la tension de commande (UA) effective est déterminée en mesurant une tension de système (Us) présente à l'aide d'une conversion analogique-numérique en une valeur de tension de fonctionnement (Ub) numérique et en la multipliant par la largeur d'impulsion (PW) définie,
dans lequel, dans le premier mode de fonctionnement (BM1), la régulation de courant s'effectue par la détermination de la tension de commande (UA) effective et la définition de la largeur d'impulsion (PW) ainsi que la mesure du courant de bobine (IA), par exemple par l'intermédiaire d'une résistance de shunt, ou la mesure d'un courant de comparaison ou d'un courant de contrôle (Ic) proportionnel au courant de bobine (IA).

9. Procédé selon l'une des revendications précédentes,
**caractérisé en ce qu'**une électrovanne pneumatique (1) dans un système d'air comprimé (40) d'un véhicule est commandée en tant qu'électrovanne de fluide.

10. Dispositif (45) permettant de commander une électrovanne de fluide (1) dans un système de fluide (40), en particulier un système d'air comprimé d'un véhicule (41), dans lequel le dispositif (45) présente :
un moyen formant circuit d'attaque (19) permettant de commander un agencement de bobine (2) de l'électrovanne de fluide (1),
un moyen de commande (18) qui est conçu pour la mise en œuvre d'un procédé selon l'une des revendications précédentes.

11. Dispositif (45) selon la revendication 10, dans lequel le moyen de commande (18) présente :
un convertisseur analogique-numérique (12) permettant de numériser une tension de système (Us) présente et de déterminer une valeur de tension de fonctionnement (Ub) numérique, et
un moyen de calcul (14) et un moyen de comparaison (15) pour l'évaluation du critère de fonctionnement (K1).

12. Dispositif (45) selon la revendication 10 ou 11, **caractérisé en ce que** le moyen de commande (18) détermine et définit une largeur d'impulsion (PW) pour la commande du moyen formant circuit d'attaque (19), pour la formation d'une modulation de largeur d'impulsion pour l'agencement de bobine (2).

13. Dispositif (45) selon l'une des revendications 10 à 12,
**caractérisé en ce que** le moyen formant circuit d'attaque (19) comprend un circuit d'attaque inférieur (20) et un circuit d'attaque supérieur (21) entre lesquels est connecté l'agencement de bobine (2),
dans lequel un circuit en série constitué du circuit d'attaque supérieur (21), de l'agencement de bobine (2) et du circuit d'attaque inférieur (20) peut être appliqué à la tension d'alimentation (Us).

14. Agencement constitué d'un dispositif (45) selon l'une des revendications 10 à 13 et de l'électrovanne de fluide (1) commandée par le dispositif (45), laquelle électrovanne de fluide comporte l'agencement de bobine (2).

15. Système de fluide (40) pour un véhicule (41), qui présente un agencement selon la revendication 14 et des consommateurs de fluide connectés à travers l'électrovanne de fluide (1).

16. Véhicule (41) comportant un système de fluide (40) selon la revendication 15.
